# EUROPÄISCHE PATENTSCHRIFT

(11) **EP 2 016 368 B1**
(45) Veröffentlichungstag und Bekanntmachung des Hinweises auf die Patenterteilung: **31.03.2010**
(21) Anmeldenummer: 07724715.3
(22) Anmeldetag: 28.04.2007
(51) Int. Cl.: G01B 21/04

(54) **VERFAHREN UND VORRICHTUNG ZUM ANTASTEN EINES OBERFLÄCHENPUNKTES AN EINEM WERKSTÜCK**
METHOD AND APPARATUS FOR MEASURING A SURFACE POINT ON A WORKPIECE
PROCÉDÉ ET DISPOSITIF DE MESURE D'UN POINT SUR LA SURFACE D'UNE PIÈCE

(30) Priorität: 10.05.2006 DE 102006023031
(43) Veröffentlichungstag der Anmeldung: 21.01.2009
(73) Patentinhaber: Carl Zeiss Industrielle Messtechnik GmbH, 73447 Oberkochen (DE)
(72) Erfinder: AUBELE, Eugen, 89558 Böhmenkirch (DE); GRUPP, Günter, 89558 Böhmenkirch (DE); BERNHARDT, Ralf, 73432 Aalen (DE); BENDZULLA, Klaus, 74653 Kuenzelsau (DE)
(74) Vertreter: Duhme, Torsten
(86) Internationale Anmeldenummer: PCT/EP2007/003788
(87) Internationale Veröffentlichungsnummer: WO 2007/128444

(56) Entgegenhaltungen:
- EP-A- 1 376 053
- DE-A1-102004 007 968

## Beschreibung

Die vorliegende Erfindung betrifft ein Verfahren zum Antasten eines Oberflächenpunktes an einem Werkstück, insbesondere zum Bestimmen einer Raumkoordinate des Oberflächenpunktes, mit den Schritten:
- Bereitstellen eines Tastkopfes mit einer Tastkopfbasis und mit einem Taststift, der relativ zu der Tastkopfbasis beweglich ist, wobei der Taststift eine definierte Ruhelage relativ zu der Tastkopfbasis besitzt, und
- Verfahren des Tastkopfes relativ zu dem Werkstück, bis der Taststift den Oberflächenpunkt mit einer definierten Antastkraft berührt.

Die Erfindung betrifft ferner eine Vorrichtung zum Antasten eines Oberflächenpunktes an einem Werkstück, insbesondere zum Bestimmen einer Raumkoordinate des Oberflächenpunktes, mit einem Tastkopf mit einer Tastkopfbasis und einem Taststift, der relativ zu der Tastkopfbasis beweglich ist, wobei der Taststift eine definierte Ruhelage relativ zu der Tastkopfbasis besitzt, und mit zumindest einem Antrieb zum Verfahren des Tastkopfes relativ zu dem Werkstück, um den Oberflächenpunkt mit dem Taststift und mit einer definierten Antastkraft zu berühren.

Ein solches Verfahren und eine solche Vorrichtung sind aus DE 10 2004 007 968 A1 bekannt.

Die Erfindung betrifft vor allem das Gebiet der Koordinatenmesstechnik, das heißt der ein-, zwei- oder dreidimensionalen Vermessung von Werkstücken mit Hilfe von Messwerkzeugen, die die Bestimmung von Raumkoordinaten der Werkstücke an ausgewählten Messpunkten ermöglichen. Ein typisches Koordinatenmessgerät besitzt einen Messkopf, der relativ zu dem Werkstück verfahren werden kann. Der Messkopf trägt einen Sensor, mit dessen Hilfe der Messkopf in eine definierte Position in Bezug zu einem Oberflächenpunkt an dem Werkstück gebracht werden kann. Häufig wird der Oberflächenpunkt mit Hilfe eines Taststiftes angetastet bzw. berührt. Dementsprechend wird der Messkopf bei solchen Koordinatenmessgeräten üblicherweise als Tastkopf bezeichnet. Die Raumkoordinaten des angetasteten Oberflächenpunktes lassen sich nach dem Antasten aus der Stellung des Tastkopfes im Messvolumen und, wenn möglich, aus der Auslenkung und Verformung des Taststiftes bestimmen. Durch Antasten mehrerer Oberflächenpunkte an einem Werkstück können geometrische Abmessungen und Formverläufe erfasst werden.

Die Erfindung ist jedoch nicht auf Koordinatenmessgeräte im engeren Sinne beschränkt. Sie kann auch bei Werkzeugmaschinen oder bei anderen Maschinen eingesetzt werden, bei denen ein Oberflächenpunkt an einem Werkstück mit einem Taststift angetastet wird, sei es zu Messzwecken oder aus anderen Gründen.

Für Anwendungen, bei denen eine hohe Messgenauigkeit gefordert ist, muss man auch elastische Verformungen des Taststiftes und sogar des Koordinatenmessgerätes beim Antasten berücksichtigen. Zu diesem Zweck muss die Antastkraft, das heißt die Kraft, mit der der Taststift auf den Oberflächenpunkt drückt, bekannt sein bzw. bestimmt werden. Einerseits ist eine geringe Antastkraft wünschenswert, um die elastischen Verformungen am Taststift, am Koordinatenmessgerät und auch am Werkstück gering zu halten. Andererseits wird eine gewisse Antastkraft benötigt, um sicherzustellen, dass der Taststift den ausgewählten Oberflächenpunkt auch "richtig" berührt. Auch beim Vermessen bzw. Antasten von weichelastischen Werkstücken, die der Antastbewegung ausweichen, ist eine exakt definierte Antastkraft wünschenswert.

Den Fachleuten auf diesem Gebiet ist bekannt, dass die definierte Ruhelage eines beweglichen Taststiftes an seiner Tastkopfbasis bis zu einem gewissen Grad von den früheren Auslenkungen des Taststiftes abhängt. Dies ist auf verschiedene Effekte oder Einflüsse, wie etwa Reibung, magnetische Remanenz oder Materialspannungen, zurückzuführen. Insgesamt weist der Taststift ein Hystereseverhalten auf, das zwar gering sein kann, sich jedoch bei hohen Messgenauigkeiten auswirkt.

Es sind verschiedene Vorschläge gemacht worden, um die Auswirkungen des Hystereseverhaltens zu minimieren. In der eingangs erwähnten DE 10 2004 007 968 A1 wird vorgeschlagen, den Oberflächenpunkt des Werkstücks mehrfach hintereinander anzutasten, wobei verschiedene, wechselnde Antastkräfte eingestellt werden. Es wird in diesem Zusammenhang darauf hingewiesen, dass die Einstellung der Antastkräfte ebenfalls einer gewissen Hysterese unterworfen ist. Ungeachtet dessen ermöglicht das vorgeschlagene Verfahren, die Messgenauigkeit durch eine Mittelung der erhaltenen Messwerte zu erhöhen. Nachteil dieser Vorgehensweise ist allerdings, dass der Oberflächenpunkt mehrfach mit wechselnden Antastkräften angetastet werden muss, was einerseits die Messzeit verlängert und andererseits bei weichelastischen Werkstücken schwierig ist.

Es gibt eine Vielzahl von weiteren Vorschlägen, um die Hystereseeffekte durch den mechanischen Aufbau des Tastkopfes zu minimieren. Beispielhaft sei hierzu auf DE 35 29 320 C2, DE 40 27 136 A1, US 5,253,428, JP 08-304059 und JP 2005-055345 verwiesen.

DE 102 29 824 A1 schlägt ein Verfahren zum Betrieb eines Koordinatenmessgerätes vor, das in zumindest zwei verschiedenen Betriebsarten verwendet werden kann. In einer ersten Betriebsart wird der Tastkopf CNC-gesteuert verfahren, das heißt automatisch. In einer zweiten Betriebsart wird der Tastkopf manuell verfahren, wobei ein Bediener ein Steuerpult oder dergleichen bedient. Es wird vorgeschlagen, das Antasten des Oberflächenpunktes in beiden Betriebsarten mit jeweils gleichem Richtungssinn durchzuführen, um unterschiedliche Messergebnisse aufgrund unterschiedlicher Hystereseeffekte zu vermeiden.

Aus JP 9-141815 ist es bekannt, Steuersignale für einen Gravierstichel zum Gravieren eines Druckzylinders in Abhängigkeit von Bilddaten anzusteuern, die an bereits gravierten Positionen aufgenommen werden, um Ungenauigkeiten bzw. Verfälschungen der Gravuren aufgrund von Hystereseeffekten zu reduzieren.

Vor diesem Hintergrund ist es eine Aufgabe der vorliegenden Erfindung, eine weitere Alternative anzugeben, um Hystereseeffekte beim Antasten eines Werkstücks zu minimieren. Insbesondere soll die Antastkraft beim Antasten des Oberflächenpunktes mit einer hohen Genauigkeit eingestellt und/oder angezeigt werden können.

Gemäß einem Aspekt der Erfindung wird diese Aufgabe durch ein Verfahren der eingangs genannten Art gelöst, bei dem ein Korrekturdatensatz bereitgestellt wird, der ein Hystereseverhalten des Taststiftes in Bezug auf die Ruhelage repräsentiert, und bei dem die Antastkraft unter Verwendung des Korrekturdatensatzes bestimmt wird.

Nach einem anderen Aspekt der Erfindung wird diese Aufgabe durch eine Vorrichtung der eingangs genannten Art gelöst, mit einem Speicher, in dem ein Korrekturdatensatz bereitgestellt ist, der ein Hystereseverhalten des Taststiftes in Bezug auf die Ruhelage repräsentiert, und mit einer Recheneinheit, die dazu ausgebildet ist, die Antastkraft unter Verwendung des Korrekturdatensatzes zu bestimmen.

Das neue Verfahren und die neue Vorrichtung verwenden also einen Korrekturdatensatz, in dem das Hystereseverhalten des Taststiftes niedergelegt ist. Der Korrekturdatensatz basiert auf Messwerten, was bevorzugt ist, oder auf rechnerisch ermittelten Korrekturwerten, die das Hystereseverhalten des Taststiftes beschreiben. Bevorzugt basiert der Korrekturdatensatz auf Messwerten, die für den entsprechenden Tastkopf in einem vorherigen Kalibriervorgang ermittelt wurden. Dies kann für jeden Tastkopf individuell erfolgen oder es können charakteristische Messwerte für eine Familie typgleicher Tastköpfe verwendet werden. Es ist weiter bevorzugt, wenn der Korrekturdatensatz fest in dem Speicher abgespeichert ist und für alle Antastungen gleichermaßen verwendet wird.

Die Bereitstellung und Verwendung eines solchen Korrekturdatensatzes ermöglicht es, Hystereseeffekte rechnerisch weitgehend zu korrigieren. Eine rechnerische Korrektur von Fehlereffekten wird bei Koordinatenmessgeräten teilweise schon verwendet, um beispielsweise Führungsfehler zu korrigieren, die durch mangelnde Geradlinigkeit und/oder Rechtwinkligkeit von Führungsbahnen des Koordinatenmessgerätes verursacht werden. Zur Korrektur von Hystereseeffekten wurde eine rechnerische Korrektur bislang allerdings nicht in Betracht gezogen. Vielmehr wurde im Stand der Technik bislang versucht, Hystereseeffekte durch eine geeignete Konstruktion des Tastkopfes und der Lagerung des Taststiftes zu minimieren.

Die rechnerische Korrektur von Hystereseeffekten ermöglicht sehr hohe Genauigkeiten, insbesondere in Bezug auf die Antastkraft, mit der der Taststift auf den Oberflächenpunkt drückt. In einem Versuchsaufbau, den die Anmelderin der vorliegenden Erfindung erstellt hat, ließen sich Genauigkeiten bei der Einstellung der Antastkraft erreichen, die bislang nicht erreichbar waren.

Das neue Verfahren und die neue Vorrichtung besitzen darüber hinaus den Vorteil, dass die Korrektur von Hystereseeffekten prinzipiell unabhängig von der Konstruktion des Tastkopfes bzw. der speziellen Lagerung des Taststiftes ist. Daher können das neue Verfahren und die neue Vorrichtung sowohl bei aktiven Tastköpfen als auch bei passiven Tastköpfen eingesetzt werden, wobei abhängig vom jeweils verwendeten Tastkopf lediglich die individuellen Korrekturdatensätze ausgetauscht werden müssen. Die prinzipielle Vorgehensweise kann jedoch in beiden Fällen gleich sein.

Des Weiteren ermöglichen die neue Vorrichtung und das neue Verfahren eine Minimierung von Hystereseeffekten auf sehr kostengünstige Weise, da geeignete Recheneinheiten häufig schon zur Steuerung des Tastkopfes und/oder zur Bestimmung der Raumkoordinaten des angetasteten Oberflächenpunktes benötigt werden und dementsprechend vorhanden sind. In besonders bevorzugten Ausgestaltungen der Erfindung lässt sich das neue Verfahren lediglich durch eine Softwareänderung bzw. -ergänzung realisieren. Damit kann die vorliegende Erfindung sehr einfach und kostengünstig auch bei älteren Koordinatenmessgeräten nachgerüstet werden.

Die oben genannte Aufgabe ist daher vollständig gelöst.

In einer weiteren Ausgestaltung wird unter Verwendung des Korrekturdatensatzes eine Sollantastkraft bestimmt, und der Taststift wird in Abhängigkeit von der Sollantastkraft aus seiner definierten Ruhelage ausgelenkt, um die definierte Antastkraft zu erzeugen.

Diese Ausgestaltung lässt sich einfach und kostengünstig in die Steuerung bekannter Koordinatenmessgeräte integrieren, weil die vorhandenen Steuerungsmechanismen zum Einstellen der definierten Antastkraft unverändert übernommen werden können. Lediglich die Sollvorgabe wird unter Verwendung des neuen Korrekturdatensatzes bestimmt. Diese Ausgestaltung der Erfindung eignet sich für Tastköpfe mit einer aktiven Messkraftaufschaltung und insbesondere für passive Tastköpfe, bei denen die Antastkraft durch eine definierte Auslenkung des Taststiftes relativ zur Tastkopfbasis eingestellt wird.

In einer weiteren Ausgestaltung wird mit Hilfe eines Aktors eine Kraft auf den Taststift aufgebracht, wobei der Aktor in Abhängigkeit von der Sollantastkraft angesteuert wird.

Als Aktor wird insbesondere eine Tauchspule verwendet, die so zwischen der Tastkopfbasis und dem Taststift angeordnet ist, dass sich die Auslenkung des Taststiftes relativ zur Tastkopfbasis mit Hilfe eines Steuerstroms durch die Spule einstellen lässt. Diese Ausgestaltung ist vorteilhaft, weil sich die definierte Antastkraft sehr exakt und unabhängig von der Auslenkung des Taststiftes einstellen lässt. Es kann auch schon bei kleinen Auslenkungen eine große Antastkraft eingestellt werden, was von Vorteil ist, um die Hystereseeffekte an sich zu minimieren.

In einer weiteren Ausgestaltung wird der Tastkopf in Abhängigkeit von der Sollantastkraft relativ zu dem Werkstück verfahren.

Diese Ausgestaltung eignet sich vor allem für passive Tastköpfe, die nicht über einen Aktor der oben erwähnten Art verfügen. Sie ist jedoch grundsätzlich auch bei aktiven Tastköpfen anwendbar. Mit dieser Ausgestaltung kann das neue Verfahren auf einfache und kostengünstige Weise in Verbindung mit passiven Tastköpfen genutzt werden.

In einer weiteren Ausgestaltung wird unter Verwendung des Korrekturdatensatzes eine Istantastkraft bestimmt, die zur Ausgabe auf einer Anzeige bereitgestellt wird.

Diese Ausgestaltung ist von Vorteil, weil sie eine genauere Anzeige der tatsächlich ausgeübten Antastkraft ermöglicht. Der Anwender der neuen Vorrichtung erhält damit eine genauere Kontrollmöglichkeit.

In einer weiteren Ausgestaltung repräsentiert der Korrekturdatensatz eine definierte Hysteresekraft in Abhängigkeit von einer Auslenkung des Taststiftes relativ zu der Tastkopfbasis, wobei die Antastkraft in Abhängigkeit von der definierten Hysteresekraft bestimmt wird.

In dieser Ausgestaltung wird das Hystereseverhalten mit Hilfe einer Hysteresekraft repräsentiert, die der Taststift beim Antasten aufgrund seines Hystereseverhaltens auf den Objektpunkt ausübt. Diese Ausgestaltung ist bevorzugt, weil sie eine sehr schnelle Echtzeitkorrektur der Antastkraft ermöglicht. Außerdem lässt sich das Hystereseverhalten des Taststiftes mit Hilfe von Hysteresekräften sehr einfach und genau erfassen, indem man beispielsweise einen Kraftsensor als Antastobjekt verwendet.

Wenn unter Verwendung des Korrekturdatensatzes eine Sollantastkraft bestimmt wird, wird der im Korrekturdatensatz abgespeicherte Korrekturwert, vorzugsweise in Form einer Hysteresekraft, von einer vom Anmelder gewünschten Antastkraft subtrahiert, um die Sollantastkraft zu bilden. Für die Anzeige der Istantastkraft wird der Korrekturwert (Hysteresekraft) aus dem Korrekturdatensatz zu der gemessenen Antastkraft addiert. Dies erleichtert die Einstellung und Anzeige der tatsächlichen Antastkraft unter Berücksichtigung des Hystereseverhaltens des Taststiftes.

In einer weiteren Ausgestaltung wird der Taststift aus einer Ruhelage in zumindest einer ersten und einer gegenüberliegenden zweiten Raumrichtung ausgelenkt, wobei der Korrekturdatensatz eine Vielzahl von Korrekturdaten beinhaltet, mit deren Hilfe die Antastkraft bestimmt wird, wobei ein individueller Korrekturwert in Abhängigkeit von einer maximalen Auslenkung des Taststiftes in der ersten Raumrichtung ausgewählt wird, und wobei der gewählte individuelle Korrekturwert beibehalten wird, bis der Taststift in der zweiten Raumrichtung ausgelenkt wird.

In dieser Ausgestaltung wird ein Korrekturwert aus dem Korrekturdatensatz ausgewählt, nachdem der Taststift in der ersten Raumrichtung ausgelenkt wurde. Der gewählte Korrekturwert wird so lange beibehalten, bis der Taststift in die entgegengesetzte, zweite Raumrichtung ausgelenkt wird. Solange der Taststift also "nur" in seine Ruhelage zurückkehrt, nachdem er in der ersten Raumrichtung ausgelenkt wurde, wird der gewählte Korrekturwert beibehalten. Diese Ausgestaltung ermöglicht eine einfache und effiziente Realisierung des neuen Verfahrens und der neuen Vorrichtung, wobei das Hystereseverhalten des Taststiftes mit hoher Genauigkeit korrigiert wird. Ein neuer Korrekturwert wird erst dann ausgewählt, wenn der Taststift nach einer Auslenkung in der einen Richtung über seine Ruhelage hinaus in die entgegen gesetzte Raumrichtung bewegt wurde.

In einer weiteren Ausgestaltung wird der gewählte individuelle Korrekturwert beibehalten, bis der Taststift um eine definierte minimale Auslenkung in der zweiten Raumrichtung ausgelenkt wird.

In dieser Ausgestaltung wird ein gewählter Korrekturwert so lange beibehalten, bis man davon ausgehen kann, dass der Hystereseeffekt aufgrund einer entgegen gesetzten Auslenkung kompensiert bzw. umgekehrt wurde. Die Korrekturwerte werden hiernach also in einem Schwellenwertverfahren bzw. einer Schwellenwertentscheidung ausgewählt. Dies ermöglicht eine einfache Realisierung, die mit relativ wenigen Korrekturwerten auskommt und geringe Anforderungen an den Speicherbedarf der neuen Vorrichtung stellt.

Vorteilhafterweise wird eine weitere Reduzierung des Speicherbedarfs erreicht, indem individuelle Korrekturwerte aus dem Korrekturdatensatz durch Interpolation von Korrekturwerten bestimmt werden, die in dem Korrekturdatensatz vorhandenen sind.

In einer alternativen Ausgestaltung wird der gewählte individuelle Korrekturwert reduziert, sobald der Taststift in der zweiten Raumrichtung ausgelegt wird.

In dieser Ausgestaltung wird ein neuer bzw. angepasster Korrekturwert verwendet, sobald die Auslenkung des Taststiftes einen Richtungswechsel erfährt, ganz gleich wie weit der Taststift in der entgegen gesetzten zweiten Raumrichtung ausgelenkt wird. Mit dieser Ausgestaltung lässt sich schneller und exakter auf ein verändertes Hystereseverhalten reagieren, das aus einer Richtungsumkehr des Taststiftes resultiert.

In einer weiteren Ausgestaltung ist der Taststift in zumindest einer ersten und einer quer dazu verlaufenden zweiten Achsrichtung beweglich, wobei für die erste Achsrichtung ein erster Korrekturdatensatz und für die zweite Achsrichtung ein zweiter Korrekturdatensatz bereitgestellt werden, und wobei die Antastkraft für jede der Achsrichtungen unter Verwendung des zugehörigen Korrekturdatensatzes bestimmt wird. Besonders bevorzugt ist es, wenn jeder Korrekturdatensatz alle Achsabhängigkeiten des Taststiftes repräsentiert, beispielsweise also das Hystereseverhalten des Taststiftes in x-Richtung in Abhängigkeit von einer vorherigen Auslenkung des Taststiftes in x-, y- und/oder z-Richtung.

Diese Ausgestaltung ermöglicht eine besonders exakte Korrektur des Hystereseverhaltens. Durch individuelle Korrekturdatensätze für jede Achsrichtung lassen sich achsabhängige Hystereseeffekte einfach und mit hoher Genauigkeit kompensieren.

In einer weiteren Ausgestaltung wird in Abhängigkeit von der Antastkraft eine Verformung des Taststiftes beim Antasten des Oberflächenpunktes bestimmt. Vorzugsweise wird außerdem auch eine Verformung des Verschiebegestells für den Tastkopf und/oder das Werkzeug in Abhängigkeit von der Antastkraft bestimmt.

Diese Ausgestaltung nutzt die erfindungsgemäße Korrektur von Antastkräften, um die Mess- bzw. Positioniergenauigkeit zu erhöhen. Damit eignet sich diese Ausgestaltung besonders für Koordinatenmessgeräte, die besonders hohe Anforderungen an die Messgenauigkeit erfüllen sollen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung eines Koordinatenmessgerätes gemäß einem Ausführungsbeispiel der Erfindung;
- Figur 2: eine vereinfachte Darstellung eines Tastkopfes aus dem Koordinatenmessgerät aus Figur 1;
- Figur 3: eine grafische Darstellung eines Korrekturdatensatzes, der in dem Koordinatenmessgerät aus Figur 1 abgespeichert ist;
- Figur 4: ein vereinfachtes Flussdiagramm zur Erläuterung eines Ausführungsbeispiels des erfindungsgemäßen Verfahrens; und
- Figur 5: ein vereinfachtes Flussdiagramm zur Erläuterung eines Verfahrens zum Aufnehmen des Korrekturdatensatzes aus Figur 3.

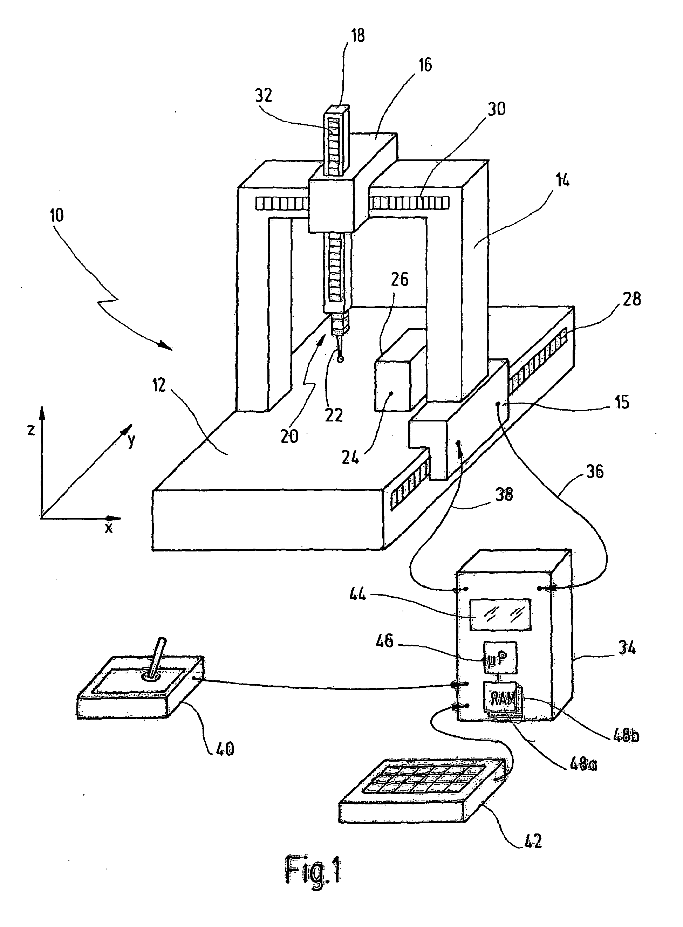

In Figur 1 ist ein Koordinatenmessgerät als ein bevorzugtes Ausführungsbeispiel für eine erfindungsgemäße Vorrichtung in seiner Gesamtheit mit der Bezugsziffer 10 bezeichnet. Das Koordinatenmessgerät 10 ist hier in Portalbauweise dargestellt, was ebenfalls beispielhaft zu verstehen ist. Die Erfindung ist nicht auf einen bestimmten Gestellaufbau beschränkt und sie kann beispielsweise auch bei Koordinatenmessgeräten in Horizontalarm-Bauweise eingesetzt werden. Darüber hinaus kann die Erfindung auch bei Maschinen eingesetzt werden, bei denen ein Werkstück relativ zu einem feststehenden Tastkopf verfahren wird, weil es im Rahmen der vorliegenden Erfindung allein auf die relative Bewegung zwischen dem Tastkopf und dem Werkstück ankommt.

Das Koordinatenmessgerät 10 besitzt eine Basis 12, auf der ein Portal 14 mit einem Antrieb 15 angeordnet ist. Das Portal 14 kann mit Hilfe des Antriebs 15 entlang einer Achsrichtung verfahren werden, die üblicherweise als y-Achse bezeichnet wird.

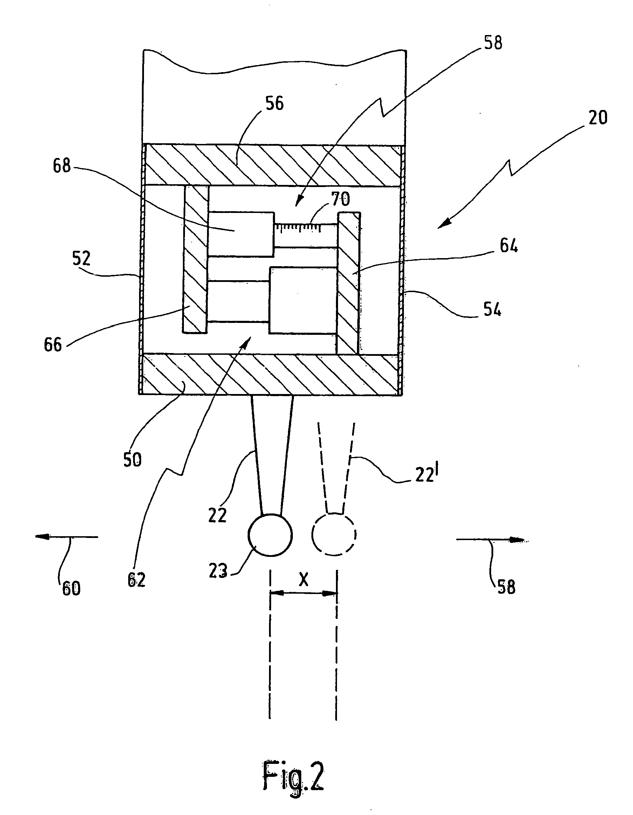

Am oberen Querträger des Portals 14 ist ein Schlitten 16 angeordnet, der in x-Richtung verfahren werden kann. Der Schlitten 16 trägt eine Pinole 18, die in z-Richtung verfahren werden kann. Am unteren freien Ende der Pinole 18 befindet sich ein Tastkopf 20 mit einem Taststift 22. Der Taststift 22 besitzt an seinem freien Ende eine Tastkugel 23 (Figur 2), die dazu dient, einen Oberflächenpunkt 24 an einem Werkstück 26 anzutasten.

Mit den Bezugsziffern 28, 30, 32 sind Linearmaße bezeichnet, die parallel zu den Achsrichtungen des Koordinatenmessgerätes 10 angeordnet sind. Beispielsweise handelt es sich hier um Glasmaßstäbe, die mit Hilfe von geeigneten Sensoren (hier nicht dargestellt) abgelesen werden, um die Verfahrpositionen des Portals 14, des Schlittens 16 und der Pinole 18 zu bestimmen. Mit Hilfe dieser Messwerte lässt sich die Position des Tastkopfes 20 im Messvolumen des Koordinatenmessgerätes 10 bestimmen. Aus der Position des Tastkopfes kann die Raumkoordinate eines angetasteten Oberflächenpunktes 24 bestimmt werden.

Mit der Bezugsziffer 34 ist eine Auswerte- und Steuereinheit bezeichnet, die über Leitungen 36, 38 mit den Antrieben und Sensoren des Koordinatenmessgerätes 10 verbunden ist. Des Weiteren ist die Auswerte- und Steuereinheit 34 in diesem Ausführungsbeispiel mit einem Steuerpult 40 und einer Tastatur 42 verbunden. Das Steuerpult 40 ermöglicht eine manuelle Steuerung des Koordinatenmessgerätes 10. Die Tastatur 42 ermöglicht die Eingabe von Betriebsparametern und die Auswahl von Messprogrammen etc.

Die Steuereinheit 34 besitzt hier eine Anzeige 44, auf der Messergebnisse, Parameterwerte u.a. ausgegeben werden können. Des Weiteren besitzt sie einen Prozessor 46 und einen Speicher 48, der hier vereinfacht mit zwei Speicherbereichen 48a, 48b dargestellt ist. In den Speicherbereichen 48a, 48b sind Korrekturdatensätze abgespeichert, mit deren Hilfe sich Hystereseeffekte des Taststiftes beim Antasten des Oberflächenpunktes 24 minimieren lassen. In dem bevorzugten Ausführungsbeispiel ist ein Korrekturdatensatz für jede Achsrichtung abgespeichert, in der der Taststift 22 ausgelenkt werden kann.

Figur 2 zeigt den Tastkopf 20 des Koordinatenmessgerätes 10 mit weiteren Details, allerdings in einer stark vereinfachten Darstellung.

Der Taststift 22 ist an einem beweglichen Teil 50 befestigt, das über zwei Blattfedern 52, 54 mit einer Tastkopfbasis 56 verbunden ist. Aufgrund der Blattfedern 52, 54 kann sich das bewegliche Teil 50 mit dem Taststift 22 relativ zu der Tastkopfbasis 56 bewegen, wobei die zwei zueinander entgegengesetzten Bewegungsrichtungen mit den Pfeilen 58, 60 angedeutet sind.

Die Fachleute auf diesem Gebiet werden erkennen, dass der in Figur 2 dargestellte Tastkopf 20 eine Auslenkung des Taststiftes 22 in nur einer Achsrichtung 58, 60 ermöglicht, was auf die vereinfachte Darstellung zurückzuführen ist. Für eine Auslenkung des Taststiftes 22 in den zwei weiteren Achsrichtungen können weitere Blattfedern 52, 54 vorhanden sein, wie dies den Fachleuten auf diesem Gebiet bekannt ist.

Mit der Bezugsziffer 62 ist ein Aktor bezeichnet, mit dessen Hilfe das Teil 50 relativ zu der Tastkopfbasis 56 ausgelenkt werden kann. Im dargestellten Ausführungsbeispiel ist der Aktor 62 eine Tauchspule, die zwischen zwei Schenkeln 64, 66 angeordnet ist. Der Schenkel 64 ist mit dem beweglichen Teil 50 verbunden, der Schenkel 66 ist mit der Tastkopfbasis 56 verbunden. Der Aktor 62 ist in der Lage, die Schenkel 64, 66 auseinander zu drücken oder gegeneinander zu ziehen, wodurch der Taststift 22 mit dem Teil 50 in die Raumrichtung 58 oder in die Raumrichtung 60 ausgelenkt wird.

Mit der Bezugsziffer 68 ist ein Sensor bezeichnet, der ebenfalls zwischen den beiden Schenkeln 64, 66 angeordnet ist. Der Sensor 68 ist hier mit einer Skala 70 dargestellt, die es ermöglicht, eine aktuelle Auslenkung X des Taststiftes 22 (dargestellt bei Bezugsziffer 22') messtechnisch zu erfassen. Der Sensor 68 kann eine Tauchspule, ein Hall-Sensor, ein optische Sensor oder ein anderer geeigneter Positions- oder Längensensor sein.

Die Fachleute auf diesem Gebiet werden erkennen, dass der Tastkopf 20 aufgrund des Aktors 62 ein aktiver Tastkopf ist, bei dem der Taststift 22 mit Hilfe des Aktors 62 ausgelenkt werden kann, um eine definierte Antastkraft zu erzeugen. Abweichend hiervon kann die Erfindung auch bei passiven Tastköpfen eingesetzt werden, die keinen Aktor 62 aufweisen.

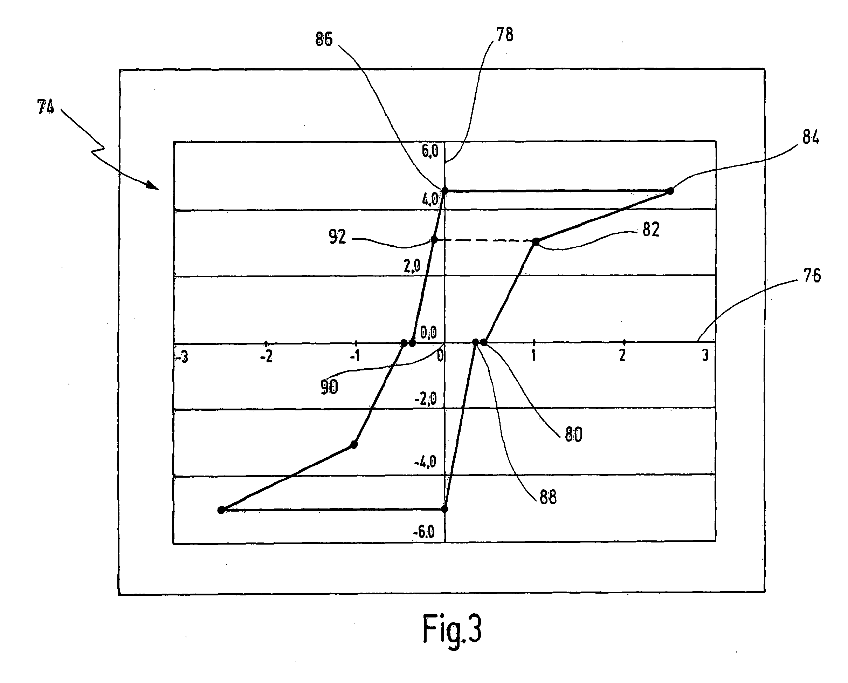

In Figur 3 ist ein Korrekturdatensatz, der in dem Speicher 48 der Steuereinheit 34 gespeichert ist, in seiner Gesamtheit mit der Bezugsziffer 74 bezeichnet. Der Korrekturdatensatz 74 ist hier in Form einer Hysteresekurve dargestellt. Auf der Abszisse 76 des zugrunde liegenden Koordinatensystems sind die Auslenkungen des Taststiftes 22 in den Bewegungsrichtungen 58, 60 angegeben. Auf der Ordinate 78 sind die Hysteresekräfte angegeben, die der Taststift 22 nach einer entsprechenden Auslenkung auf einen Oberflächenpunkt 24 eines Werkstücks 26 ausübt. In dem dargestellten Ausführungsbeispiel sind die Auslenkungen des Taststiftes 2 auf der Abszisse 76 in mm angegeben. Die Hysteresekräfte auf der Ordinate 78 sind in mN angegeben.

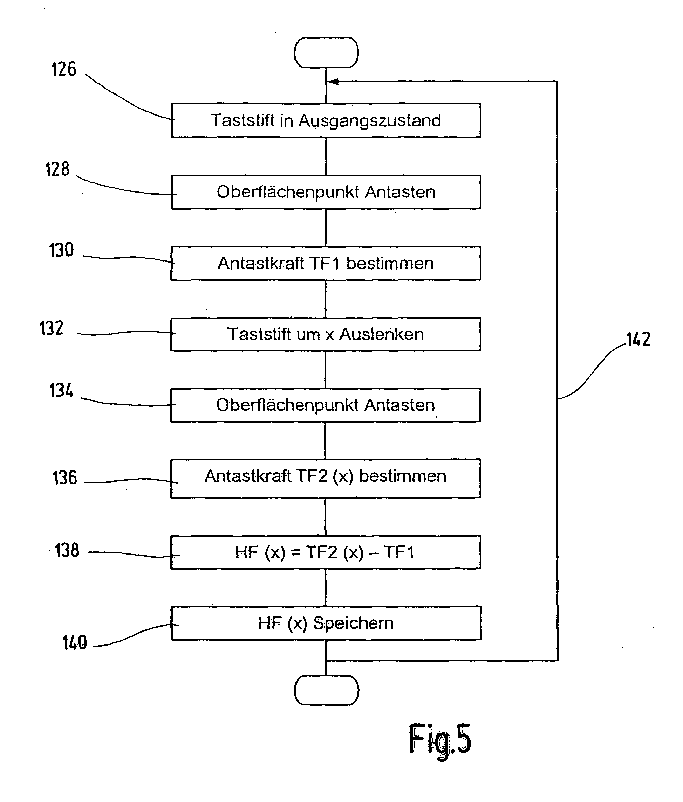

Mit den Bezugsziffern 80, 82, 84, 86, 88 sind verschiedene Korrekturwerte des Korrekturdatensatzes 74 bezeichnet. Die angegebenen Korrekturwerte wurden als Stützstellen des Korrekturdatensatzes 74 messtechnisch ermittelt, wie weiter unten anhand Figur 5 erläutert ist. Des Weiteren sind die angegebenen Korrekturwerte (zusammen mit weiteren, hier nicht ausdrücklich bezeichneten Korrekturwerten) in dem Speicher 48 der Steuereinheit 34 abgespeichert. Zwischen den abgespeicherten Korrekturwerten liegende Korrekturwerte werden von der Steuereinheit 34 vorteilhafterweise durch Interpolation ermittelt.

Der Korrekturdatensatz 74 in Figur 3 ist beispielhaft für Auslenkungen des Taststiftes 22 in x-Richtung (negativ und positiv) angegeben. Es versteht sich, dass ähnliche Korrekturdatensätze auch für die beiden anderen Achsrichtungen y und z in dem Speicher 48 der Steuereinheit 34 abgespeichert sind.

Die Antastkräfte, mit denen der Taststift 22 einen Oberflächenpunkt 24 an dem Werkstück 26 antastet, werden mit Hilfe des Korrekturdatensatzes 74 wie folgt korrigiert. Nach der ersten oder erneuten Inbetriebnahme des Koordinatenmessgerätes 10 wird angenommen, dass der Taststift in einem hysteresefreien Zustand ist. Es erfolgt zunächst keine Korrektur, bis der Taststift 22 zum ersten Mal um 0,5 mm (oder mehr) aus seiner Ruhelage, die dem Koordinatenursprung 90 entspricht, ausgelenkt wird. Nun sei angenommen, dass der Taststift 22 in positiver x-Richtung um 1 mm ausgelenkt wird. Für eine solche Auslenkung lässt sich aus dem Korrekturdatensatz 74 eine Hysteresekraft von etwa 3 mN ablesen. Mit diesem Korrekturwert (Bezugsziffer 82) werden alle nachfolgenden Antastkräfte korrigiert, und zwar so lange, bis der Taststift 22 weiter als 1 mm in positiver x-Richtung ausgelenkt wird, oder bis der Taststift 22 in negativer x-Richtung um 0,2 mm ausgelenkt wird (Bezugsziffer 92). Im erstgenannten Fall "wandert" der Korrekturwert auf der Kurve 74 in Richtung des Korrekturwertes 84. Im zuletzt genannten Fall wird der Korrekturwert 82 beibehalten, bis der Taststift den Punkt 92 auf der Kurve 74 erreicht.

Abweichend hiervon kann der Korrekturwert (hier also die Hysteresekraft von 3 mN) auch schon reduziert werden, wenn der Taststift 22 in negativer x-Richtung ausgelenkt wird, jedoch noch nicht den Punkt 92 auf der Kurve 74 erreicht hat. Beispielsweise kann eine Reduzierung des zuvor gewählten Korrekturwertes 82 prozentual in Abhängigkeit davon erfolgen, wie weit der Taststift 22 in der negativen x-Richtung ausgelenkt wurde.

Wie man aus dem Kurvenverlauf des Korrekturdatensatzes 74 erkennt, liegt die maximale Antastkorrektur hier bei etwa 4,5 mN (Korrekturwerte 84). Selbst wenn der Taststift 22 mehr als 2,5 mm ausgelenkt wird, erfolgt hier keine stärkere Korrektur der Antastkraft.

Wie man aus dem Kurvenverlauf in Figur 3 weiterhin ersehen kann, liegt der Korrekturwert 88, der einer Antastkraftkorrektur von Null (keine Korrektur bzw. Hysteresekraft gleich null) entspricht, auf der Abszisse 76 etwas vor dem Korrekturwert 80. Ein solcher Kurvenverlauf ist vorteilhaft, weil er dafür sorgt, dass die Korrektur der Antastkraft frühzeitig reduziert bzw. zurückgenommen wird und im Vergleich dazu erst später einsetzt. Hierdurch wird eine zu starke Korrektur, die ihrerseits Messfehler erzeugen kann, vermieden.

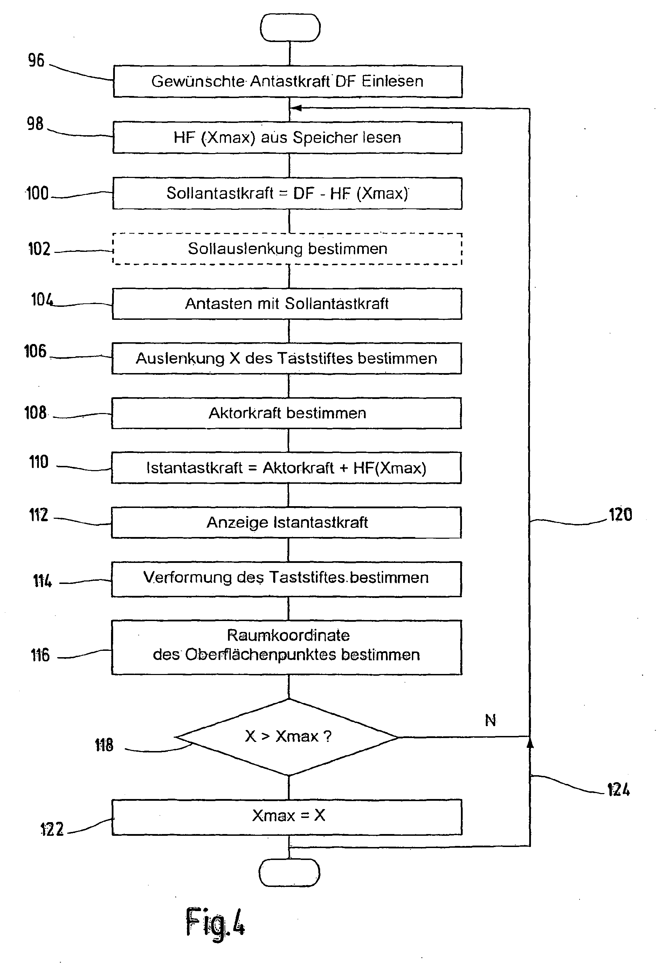

Figur 4 zeigt ein bevorzugtes Ausführungsbeispiel des neuen Verfahrens anhand eines vereinfachten Flussdiagramms. Gemäß Schritt 96 wird zunächst die vom Anwender gewünschte Antastkraft DF als Parameterwert eingelesen. Der Anwender kann die gewünschte Antastkraft DF beispielsweise mit Hilfe der Tastatur 42 in die Steuerung 34 eingeben.

Zu Beginn des Messablaufs wird gemäß Schritt 98 die Hysteresekraft HF (Xₘₐₓ) aus dem Speicher 48 ausgelesen. Mit anderen Worten wird in Abhängigkeit von einer zuvor detektierten Auslenkung des Taststiftes 22 ein geeigneter Korrekturwert aus dem Korrekturdatensatz 74 geholt. Nach Inbetriebnahme des Koordinatenmessgerätes 10 wird zunächst ein Korrekturwert HF = 0 verwendet.

Anschließend wird gemäß Schritt 100 eine Sollantastkraft als Differenz der gewünschten Antastkraft DF und der Hysteresekraft HF aus dem Korrekturdatensatz 74 berechnet. Mit anderen Worten wird die gewünschte Antastkraft um die Hysteresekraft, die aufgrund von Hystereseeffekten vorhanden ist, reduziert. Sofern es sich um einen passiven Tastkopf handelt, wird gemäß Schritt 102 eine Sollauslenkung des Taststiftes 22 in Abhängigkeit von der Sollantastkraft bestimmt. Bei einem aktiven Tastkopf wird der Aktor 62 mit der Sollantastkraft als Vorgabewert angesteuert.

Gemäß Schritt 104 wird der Oberflächenpunkt 24 mit der Sollantastkraft angetastet, wobei die tatsächliche Antastkraft aufgrund der vorhandenen Hysteresekraft der gewünschten Antastkraft DF entspricht.

Gemäß Schritt 106 wird die Auslenkung X des Taststiftes 22 bestimmt. Die Auslenkung X wird sowohl zur Bestimmung der X-Raumkoordinate des Oberflächenpunktes 24 als auch für die erfindungsgemäße Korrektur der Antastkraft benötigt.

Gemäß Schritt 108 wird bei einem aktiven Tastkopf außerdem die vom Aktor 62 erzeugte Antastkraft bestimmt. Wenn als Aktor eine Tauchspule verwendet wird, kann beispielsweise der Strom gemessen werden, der durch die Tauchspule fließt.

Gemäß Schritt 110 wird die Istantastkraft als Summe der messtechnisch erfassten Aktorkraft und der Hysteresekraft HF bestimmt. Es versteht sich, dass die Differenzbildung in Schritt 100 und die Summenbildung 110 vorzeichenrichtig durchgeführt werden, wobei die Vorzeichen hier gemäß der Darstellung in Figur 3 gewählt werden.

Gemäß Schritt 112 kann die Istantastkraft auf der Anzeige 44 angezeigt werden. Gemäß Schritt 114 wird mit Hilfe der Istantastkraft ferner eine Verformung des Taststiftes 22 bestimmt. Anschließend wird gemäß Schritt 116 die Raumkoordinate des angetasteten Oberflächenpunktes 24 bestimmt, wobei vorzugsweise die Verformung des Taststiftes 22 infolge der Istantastkraft berücksichtigt wird. Die bestimmte Raumkoordinate kann auf der Anzeige 44 ausgegeben werden.

Gemäß Schritt 118 erfolgt als nächstes eine Abfrage, ob die Auslenkung des Taststiftes 22 beim Antasten des Oberflächenpunktes 24 größer war als die jüngste maximale Auslenkung Xₘₐₓ in gleicher Raumrichtung. Wenn dies nicht der Fall ist, wird gemäß Schleife 120 der zuletzt verwendete Korrekturwert für die Antastkraft beibehalten. Andernfalls wird gemäß Schritt 122 die jüngste Auslenkung X als neue maximale Auslenkung Xₘₐₓ übernommen, und es wird gemäß Schritt 98 ein neuer, entsprechend angepasster Korrekturwert aus dem Korrekturdatensatz 74 ausgewählt. Anschließend erfolgt gemäß Schleife 124 der nächste Messvorgang unter Verwendung des neuen Korrekturwertes.

Figur 5 zeigt ein vereinfachtes Flussdiagramm zur Erläuterung eines Ausführungsbeispiels, mit dessen Hilfe der Korrekturdatensatz 74 aus Figur 3 aufgenommen werden kann.

Gemäß Schritt 126 wird der Taststift 22 zunächst in einen Ausgangszustand versetzt, der als hysteresefrei angenommen wird. Anschließend wird gemäß Schritt 128 ein Oberflächenpunkt an einem Kraftsensor (hier nicht dargestellt) angetastet. Der Kraftsensor fungiert dabei als Kalibrierwerkstück. Mit Hilfe des Kraftsensors wird gemäß Schritt 130 eine erste Antastkraft TF1 bestimmt. Die Antastkraft TF1 wird als Referenzwert für eine (zumindest angenommen) hysteresefreie Auslenkung verwendet.

Gemäß Schritt 132 wird der Taststift anschließend um einen Wert x in eine Raumrichtung ausgelenkt. Anschließend wird derselbe Oberflächenpunkt an dem Kraftsensor erneut angetastet (Schritt 134), und es wird gemäß Schritt 136 die Antastkraft TF2(x) bestimmt. Typischerweise unterscheiden sich die Antastkräfte TF1 und TF2(x) voneinander, was auf das Hystereseverhalten des Taststiftes 22 zurückzuführen ist.

Gemäß Schritt 138 wird die Differenz der Antastkräfte TF2(x) - TF1 als Hysteresekraft HF(x) bzw. als Korrekturwert im Korrekturdatensatz 74 gespeichert (Schritt 140). Anschließend wird gemäß Schleife 142 ein nächster Korrekturwert des Korrekturdatensatzes 74 bestimmt.

Vorteilhafterweise wird der Korrekturdatensatz 74 mit den Korrekturwerten 80-88 in einem Kalibriervorgang aufgenommen und in dem Speicher 48 des Koordinatenmessgerätes 10 dauerhaft abgespeichert, so dass ein identischer Korrekturdatensatz 74 für alle nachfolgenden Antastungen verwendet wird.

## Patentansprüche

1. Verfahren zum Antasten eines Oberflächenpunktes (24) an einem Werkstück (26), insbesondere zum Bestimmen einer Raumkoordinate des Oberflächenpunktes, mit den Schritten:
- Bereitstellen eines Tastkopfes (20) mit einer Tastkopfbasis (56) und mit einem Taststift (22), der relativ zu der Tastkopfbasis (56) beweglich ist, wobei der Taststift (22) eine definierte Ruhelage relativ zu der Tastkopfbasis (56) besitzt, und
- Verfahren des Tastkopfes (22) relativ zu dem Werkstück (26), bis der Taststift (22) den Oberflächenpunkt (24) mit einer definierten Antastkraft berührt,
**dadurch gekennzeichnet, dass** ein Korrekturdatensatz (48; 74) bereitgestellt wird, der ein Hystereseverhalten des Taststiftes (22) in Bezug auf die Ruhelage repräsentiert, und dass die Antastkraft unter Verwendung des Korrekturdatensatzes (48; 74) bestimmt wird.

2. Verfahren nach Anspruch 1, **dadurch gekennzeichnet, dass** unter Verwendung des Korrekturdatensatzes (48; 74) eine Sollantastkraft bestimmt wird (100), und dass der Taststift (22) in Abhängigkeit von der Sollantastkraft aus seiner definierten Ruhelage ausgelenkt wird (102, 104), um die definierte Antastkraft zu erzeugen.

3. Verfahren nach Anspruch 1 oder 2, **dadurch gekennzeichnet, dass** mit Hilfe eines Aktors (62) eine Kraft auf den Taststift (22) aufgebracht wird, wobei der Aktor (62) in Abhängigkeit von der Sollantastkraft angesteuert wird.

4. Verfahren nach Anspruch 2 oder 3, **dadurch gekennzeichnet, dass** der Tastkopf (20) in Abhängigkeit von der Sollantastkraft relativ zu dem Werkstück (26) verfahren wird.

5. Verfahren nach einem der Ansprüche 1 bis 4, **dadurch gekennzeichnet, dass** unter Verwendung des Korrekturdatensatzes (48; 74) eine Istantastkraft bestimmt wird (110), die zur Ausgabe auf einer Anzeige (44) bereitgestellt wird.

6. Verfahren nach einem der Ansprüche 1 bis 5, **dadurch gekennzeichnet, dass** der Korrekturdatensatz (74) eine definierte Hysteresekraft (78) in Abhängigkeit von einer Auslenkung (76) des Taststiftes (22) relativ zu der Tastkopfbasis (56) repräsentiert, wobei die Antastkraft in Abhängigkeit von der definierten Hysteresekraft bestimmt wird.

7. Verfahren nach einem der Ansprüche 1 bis 6, **dadurch gekennzeichnet, dass** der Taststift (22) in zumindest einer ersten und einer gegenüberliegenden zweiten Raumrichtung (58, 60) aus seiner Ruhelage ausgelenkt wird, wobei der Korrekturdatensatz (74) eine Vielzahl von Korrekturwerten (80, 82, 84, 86, 88) beinhaltet, mit deren Hilfe die Antastkraft bestimmt wird, wobei ein individueller Korrekturwert (82) in Abhängigkeit von einer maximalen Auslenkung des Taststiftes (22) in der ersten Raumrichtung (58) ausgewählt wird, und wobei der gewählte individuelle Korrekturwert (82) beibehalten wird, bis der Taststift in der zweiten Raumrichtung (60) ausgelenkt wird.

8. Verfahren nach Anspruch 7, **dadurch gekennzeichnet, dass** der gewählte individuelle Korrekturwert (82) beibehalten wird, bis der Taststift (22) um eine definierte minimale Auslenkung (92) in der zweiten Raumrichtung (60) ausgelenkt wird.

9. Verfahren nach Anspruch 7, **dadurch gekennzeichnet, dass** der gewählte individuelle Korrekturwert (82) reduziert wird, sobald der Taststift (22) in der zweiten Raumrichtung ausgelenkt wird.

10. Verfahren nach einem der Ansprüche 1 bis 9, **dadurch gekennzeichnet, dass** der Taststift (22) in zumindest einer ersten und einer quer dazu verlaufenden zweiten Achsrichtung (x, y, z) beweglich ist, wobei für die erste Achsrichtung ein erster Korrekturdatensatz (48a) und für die zweite Achsrichtung ein zweiter Korrekturdatensatz (48b) bereitgestellt werden, und wobei die Antastkraft für jede der Achsrichtungen unter Verwendung des zugehörigen Korrekturdatensatzes bestimmt wird.

11. Verfahren nach einem der Ansprüche 1 bis 10, **dadurch gekennzeichnet, dass** in Abhängigkeit von der Antastkraft eine Verformung des Taststiftes beim Antasten des Oberflächenpunktes bestimmt wird (114).

12. Vorrichtung zum Antasten eines Oberflächenpunktes (24) an einem Werkstück (26), insbesondere zum Bestimmen einer Raumkoordinate des Oberflächenpunktes, mit
- einem Tastkopf (20) mit einer Tastkopfbasis (56) und einem Taststift (22), der relativ zu der Tastkopfbasis (56) beweglich ist, wobei der Taststift (22) eine definierte Ruhelage relativ zu der Tastkopfbasis (56) besitzt, und mit
- zumindest einem Antrieb (15) zum Verfahren des Tastkopfes (20) relativ zu dem Werkstück (26), um den Oberflächenpunkt (24) mit dem Taststift (22) und mit einer definierten Antastkraft zu berühren,
**gekennzeichnet durch** einen Speicher (48), in dem ein Korrekturdatensatz (74) bereitgestellt ist, der ein Hystereseverhalten des Taststiftes (22) in Bezug auf die Ruhelage repräsentiert, und **durch** eine Recheneinheit (46), die dazu ausgebildet ist, die Antastkraft unter Verwendung des Korrekturdatensatzes (74) zu bestimmen.

## Claims

1. A method for contacting a surface point (24) on a workpiece (26), in particular for determining a spatial coordinate of the surface point, the method comprising the steps of
- providing a probe head (20) having a probe head base (56) and a stylus (22) which is moveable relative to the probe head base (56), the stylus (22) having a defined rest position relative to the probe head base (56), and
- moving the probe head (22) relative to the workpiece (26) until the stylus (22) touches the surface point (24) with a defined contacting force,
**characterized in that** a correction data record (48; 74) is provided which represents a hysteresis behavior of the stylus (22) with respect to the rest position, and the contacting force is determined using the correction data record (48; 74).

2. The method of claim 1, **characterized in that** a desired contacting force (100) is determined by using the correction data record (48; 74), and the stylus (22) is displaced (102, 104) from its defined rest position depending on the desired contacting force in order to generate the defined contacting force.

3. The method of claim 1 or 2, **characterized in that** a force is applied to the stylus (22) by means of an actuator (62) which is driven as a function of the desired contacting force.

4. The method of claim 2 or 3, **characterized in that** the probe head (20) is moved relative to the workpiece (26) as a function of the desired contacting force.

5. The method of one of claims 1 to 4, **characterized in that** an actual contacting force is determined (110) by using the correction data record (48; 74), said actual contacting force being provided for output on a display (44),

6. The method of one of claims 1 to 5, **characterized in that** the correction data record (74) represents a defined hysteresis force (78) as a function of a deployment (76) of the stylus (22) relative to the probe head base (56), the contacting force being determined as a function of the defined hysteresis force.

7. The method of one of claims 1 to 6, **characterized in that** the stylus (22) is displaced from its rest position in at least a first and an opposite second spatial direction (56, 60), the correction data record (74) comprising a plurality of correction values (80, 82, 84, 86, 88) by means of which the contacting force is determined, wherein an individual correction value (82) is selected depending on a maximum deployment of the stylus (22) in the first spatial direction (58), and the selected individual correction value (82) is kept until the stylus is displaced in the second spatial direction (60).

8. The method of claim 7, **characterized in that** the selected individual correction value (82) is kept until the stylus (22) is displaced by a defined maximum displacement (92) in the second spatial direction.

9. The method of claim 7, **characterized in that** the selected individual correction value (82) is reduced as soon as the stylus (22) is displaced in the second spatial direction.

10. The method of one of claims 1 to 9, **characterized in that** the stylus (22) can be moved in at least a first and a second axial direction (x, y, z) extending transversely to the first axial direction, with a first correction data record (48a) being provided for the first axial direction and a second correction data record (48b) being provided for the second axial direction, and the contacting force being determined for each of the axial directions by using the associated correction data record.

11. The method of one of claims 1 to 10, **characterized in that** a deformation of the stylus when contacting the surface point is determined (114) as a function of the contacting force.

12. A device for contacting a surface point (24) on a workpiece (26), in particular for determining a spatial coordinate of the surface point, the device comprising:
- a probe head (20) having a probe head base (56) and a stylus (22) which is moveable relative to the probe head base (56), the stylus (22) having a defined rest position relative to the probe head base (56), and
- at least one drive (15) for moving the probe head (20) relative to the workpiece (26) in order to touch the surface point (24) with the stylus (22) and with a defined contacting force,
**characterized by** a memory (48) in which a correction data record (74) is provided, which correction data record represents a hysteresis behavior of the stylus (22) with respect to the rest position, and by a computation unit (46) designed to determine the contacting force using the correction data record (74).

## Revendications

1. Procédé de palpage d'un point de surface (24) sur une pièce à travailler (26), en particulier pour déterminer une coordonnée spatiale du point de surface, comprenant les étapes consistant à :
- fournir une tête de palpage (20) avec une base de tête de palpage (56) et avec une tige de palpage (22) mobile par rapport à la base de tête de palpage (56), ladite tige de palpage (22) possédant une position de repos définie par rapport à la base de tête de palpage (56), et
- déplacer la tête de palpage (20) par rapport à la pièce à travailler (26) jusqu'à ce que la tige de palpage (22) entre en contact avec le point de surface (24) avec une force de palpage définie,
**caractérisé en ce qu'**un enregistrement de données de correction (48 ; 74) est fourni qui représente un comportement d'hystérésis de la tige de palpage (22) par rapport à la position de repos, et **en ce que** la force de palpage est déterminée en utilisant l'enregistrement de données de correction (48 ; 74).

2. Procédé selon la revendication 1, **caractérisé en ce qu'**en utilisant l'enregistrement de données de correction (48 ; 74), une force de palpage théorique est déterminée (100), et **en ce que** la tige de palpage (22) est déviée (102, 104) de sa position de repos définie, en fonction de la force de palpage théorique, afin de générer la force de palpage définie.

3. Procédé selon la revendication 1 ou 2, **caractérisé en ce qu'**à l'aide d'un actionneur (62), une force est exercée sur la tige de palpage (22), l'actionneur (62) étant piloté en fonction de la force de palpage théorique.

4. Procédé selon la revendication 2 ou 3, **caractérisé en ce que** la tête de palpage (20) est déplacée en fonction de la force de palpage théorique par rapport à la pièce à travailler (26).

5. Procédé selon l'une quelconque des revendications 1 à 4,
**caractérisé en ce qu'**en utilisant l'enregistrement de données de correction (48 ; 74), une force de palpage réelle est déterminée (110) qui est fournie pour être sortie sur un affichage (44).

6. Procédé selon l'une quelconque des revendications 1 à 5,
**caractérisé en ce que** l'enregistrement de données de correction (74) représente une force d'hystérésis (78) définie en fonction d'une déviation (76) de la tige de palpage (22) par rapport à la base de tête de palpage (56), la force de palpage étant déterminée en fonction de la force d'hystérésis définie.

7. Procédé selon l'une quelconque des revendications 1 à 6,
**caractérisé en ce que** la tige de palpage (22) est déviée dans au moins une première direction spatiale et une deuxième direction spatiale opposée (58, 60) à partir de sa position de repos, dans lequel l'enregistrement de données de correction (74) comprend une pluralité de valeurs de correction (80, 82, 84, 86, 88) à l'aide desquelles la force de palpage est déterminée, dans lequel une valeur de correction individuelle (82) est sélectionnée en fonction d'une déviation maximale de la tige de palpage (22) dans la première direction spatiale (58), et dans lequel la valeur de correction individuelle sélectionnée (82) est maintenue jusqu'à ce que la tige de palpage soit déviée dans la deuxième direction spatiale (60).

8. Procédé selon la revendication 7, **caractérisé en ce que** la valeur de correction individuelle (82) est maintenue jusqu'à ce que la tige de palpage (22) soit déviée d'une déviation minimale définie (92) dans la deuxième direction spatiale (60).

9. Procédé selon la revendication 7, **caractérisé en ce que** la valeur de correction individuelle (82) est réduite dès que la tige de palpage (22) est déviée dans la deuxième direction spatiale.

10. Procédé selon l'une quelconque des revendications 1 à 9,
**caractérisé en ce que** la tige de palpage (22) est mobile dans au moins une première direction axiale et une deuxième direction axiale s'étendant transversalement à celle-ci (x, y, z), un premier enregistrement de données de correction (48a) étant fourni pour la première direction axiale et un deuxième enregistrement de données de correction (48b) étant fourni pour la deuxième direction axiale, et dans lequel la force de palpage pour chacune des directions axiales est déterminée en utilisant l'enregistrement de données de correction associé.

11. Procédé selon l'une quelconque des revendications 1 à 10,
**caractérisé en ce qu'**en fonction de la force de palpage, une déformation de la tige de palpage est déterminée lors du palpage du point de surface (114).

12. Dispositif de palpage d'un point de surface (24) sur une pièce à travailler (26), en particulier pour déterminer une coordonnée spatiale du point de surface, comprenant
- une tête de palpage (20) avec une base de tête de palpage (56) et avec une tige de palpage (22) mobile par rapport à la base de tête de palpage (56), ladite tige de palpage (22) possédant une position de repos définie par rapport à la base de tête de palpage (56), et
- au moins un dispositif d'entraînement (15) pour déplacer la tête de palpage (20) par rapport à la pièce à travailler (26) afin de toucher le point de surface (24) par la tige de palpage (22) et avec une force de palpage définie,
**caractérisé par** une mémoire (48) dans laquelle est fourni un enregistrement de données de correction (74) qui représente un comportement d'hystérésis de la tige de palpage (22) par rapport à la position de repos, et par une unité de calcul (46) qui est réalisée pour déterminer la force de palpage en utilisant l'enregistrement de données de correction (74).
